# EUROPEAN PATENT SPECIFICATION

(11) **EP 0 445 296 B1**
(45) Date of publication and mention of the grant of the patent: **06.07.1994**
(21) Application number: 90912966.0
(22) Date of filing: 04.09.1990
(51) Int. Cl.: B23H 7/10

(54) **WIRE TENSION CONTROL DEVICE**
EINRICHTUNG ZUM REGELN DER SPANNUNG EINES FADENS
DISPOSITIF DE REGULATION DE LA TENSION D'UN FIL

(30) Priority: 27.09.1989 JP 249218/89
(43) Date of publication of application: 11.09.1991
(73) Proprietor: FANUC LTD., Minamitsuru-gun, Yamanashi 401-05 (JP)
(72) Inventor: ASO, Toshiyuki, Room 7-208, FANUC Manshonharimomi, Minamitsuru-gun, Yamanashi 401-05 (JP); KAJITORI, Toyotada, FANUC Dai 3-Vira-karamatsu, Minamitsuru-gun, Yamanashi 401-05 (JP); HIRAI, Toshio, FANUC Dai-3 Vira-karamatsu, Minamitsuru-gun, Yamanashi 401-05 (JP)
(74) Representative: Billington, Lawrence Emlyn
(86) International application number: JP9001132
(87) International publication number: WO9104823

(56) References cited:
- JP-A-54 145 098
- JP-A-57 144 633
- JP-A-57 178 619
- WORLD PATENTS INDEX Week 7846, Derwent Publications Ltd., London, GB; AN 78-K1508A 46 & SU-A-586 323 (ASIA AS SIBE BR AUTOM EL) 13 December 1977
- PATENT ABSTRACTS OF JAPAN vol. 8, no. 284 (M-348)(1721) 26 December 1984 & JP-A-59 152 022 (FANUC K.K.) 30 August 1984

## Description

The present invention relates to an apparatus which is mounted on a wire-cut electric discharge machine and which is capable of precisely controlling the wire tension.

In general, in a wire-cut electric discharge machine, the wire tension is controlled to attain a desired working precision. Typically, an exciting current for the electromagnetic powder clutch of a braking device for giving the wire tension is controlled to a predetermined value corresponding to a preset value of the wire tension, to thereby control the wire tension. Thus see JP-A-59-152022. However, if the powder clutch is subjected to deterioration with age, it becomes impossible to apply a preset braking force to the wire by means of the braking device even when a preset exciting current is supplied to the powder clutch, so that the wire tension cannot be kept at the preset value. Further, various frictional resistances to which the wire is subjected during the wire feeding operation vary, and accordingly the wire tension varies.

An object of the present invention is to provide a wire tension control apparatus capable of precisely controlling the wire tension.

According to the present invention there is provided a wire tension control apparatus mounted on a wire-cut electric discharge machine to control the electrode wire tension which is an electric discharge machining condition, the apparatus comprising a braking device for applying a braking force to a wire electrode thereby to cause electrode wire tension during machining, the braking device including a braking roller to apply tension to the wire electrode, and an electromagnetic powder clutch for applying a braking force to the braking roller, and control means operable to control an exciting current in the electromagnetic powder clutch thereby to adjust the braking force generated by the braking device in dependence upon a value inputted to the control means,
characterised by a wire tension detecting mechanism having a displacement member which is displaced in dependence upon the electric discharge machining wire tension and a sensor for measuring a displaced position of the displacement member, said value inputted to the control means comprising the output of said sensor.

As described above, according to the present invention, since the braking force generated by the braking device is adjusted in accordance with the sensor output indicative of the displaced position of the displacement member which is displaced in dependence on the wire tension, the wire tension can be precisely controlled, and therefore, a decrease in the working precision caused by variation in the wire tension can be prevented.

### Brief Description of the Drawings

Fig. 1 is a schematic view showing a wire tension control apparatus according to one embodiment of the present invention and a wire-cut electric discharge machine on which the wire tension control apparatus is mounted; and
Fig. 2 is an enlarged view showing the wire tension control apparatus of Fig. 1 in detail.

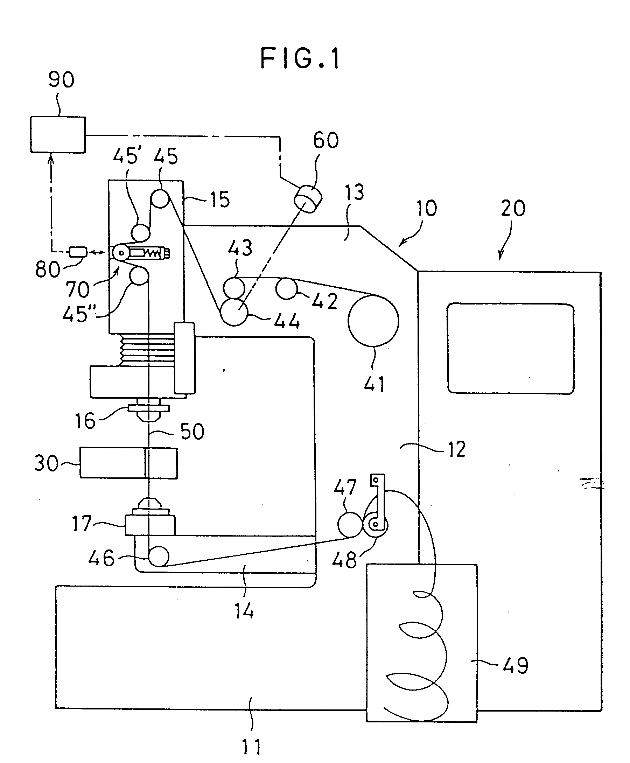

Referring to Fig. 1, a wire-cut electric discharge machine having a wire tension control apparatus mounted thereon comprises a machine main body 10, and a numerical control device 20 having a built-in type computer for controlling the operation of the machine main body. The machine main body 10 comprises a table 11, a vertical column 12 extending vertically of the machine main body from the table, and upper and lower columns 13 and 14 extending in a horizontal direction respectively from the upper and lower ends of the column 12. An upper guide assembly 16 is mounted on a housing 15 which is mounted on the distal end of the upper column 13. Further, a lower guide assembly 17 is mounted on the distal end of the lower column 14 to face the upper guide assembly 16, and a workpiece 30 disposed between the assemblies 16 and 17 is supported by a work table (not shown).

A wire electrode (hereinafter referred to as a wire) 50 is wound around a wire supply bobbin 41 which is rotatably supported by the vertical column 12. The wire 50 is fed out from the bobbin 41 to the upper guide assembly 16 through a guide roller 42, braking pinch roller 43 and braking roller 44, these elements 42 to 43 being rotatably supported by the upper column 13, and through guide rollers 45 to 45˝ and a displacement roller of a wire tension detection mechanism, mentioned later, the rollers 45 to 45˝ and the displacement roller being rotatably supported by the housing 15. The wire 50 is inserted into the wire passage of the upper guide assembly 16, a working groove formed in the workpiece 30, and the wire passage of the lower guide assembly 17, and is further extended to a wire recovery box 49 through a guide roller 46 rotatably supported by the lower column 14, and a feed roller 47 and pinch roller 48, which are rotatably supported by the vertical column 12. The elements 41 to 48 and the displacement roller of the detection mechanism constitute a wire feeding path.

Reference numeral 60 denotes an electromagnetic powder clutch which constitutes a braking device for applying tension to the wire 50 in cooperation with the braking roller 44. The clutch 60 includes a disk disposed in the housing filled with ferromagnetic particles, an input shaft coupled to the disk and fixed on the upper column 13, an electromagnetic coil, and an output shaft coupled to the rotation shaft of the braking roller 44, and is arranged to adjust the degree of coupling between the input and output shafts and consequently a braking force applied to the braking roller 44 by adjusting an exciting current applied to the electromagnetic coil.

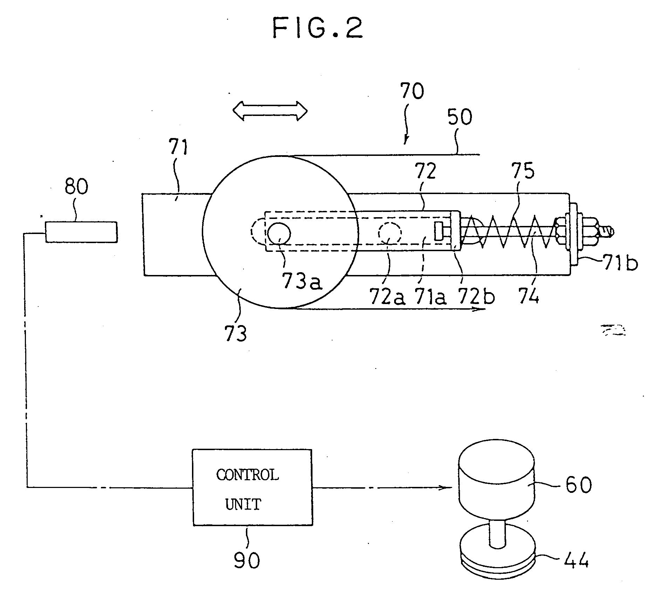

Referring to Figs. 1 and 2, the wire tension control apparatus of one embodiment of the present invention and mounted on the electric discharge machine comprises a wire tension detection mechanism 70 having a displacement roller, mentioned later, which is displaceable in dependence on the wire tension, a distance sensor 80 for measuring the displaced position of the displacement roller, and a control unit 90 for controlling an exciting current in the powder clutch 60.

More specifically, the wire tension detection mechanism 70 includes a base plate 71 fixed in the housing 15 and formed with an elongated hole 71a which extends along the axis of the base plate 71. A slider 72, having a guide protuberance 72a fitted in the elongated hole 71a, is mounted on the base plate 71 to be movable relative to the base plate along the elongated hole 71a, and a displacement roller 73 is rotatably supported on one end of the slider. A rotation shaft 73a of the roller 73 is inserted into the elongated hole 71a. Further, a projecting member 71b is integrally formed with the base plate at the internal end portion of the base plate, and a projecting member 72b disposed to face the projecting member 71b is integrally formed with the slider 72. A guide rod 74 fixed at one end to the projecting member 71b extends through the projecting member 72b and extends along the axis of the base plate 71. A coil spring 75 receiving the guide rod 74 therein is disposed between the projecting members 71b and 72b, and has its opposite ends abutted against the opposed faces of the projecting members which act as spring seats.

As described above, the wire 50 fed out from the wire supply bobbin 41 to the wire recovery box 49 extends to the downstream side from the displacement roller 73 of the detection mechanism 70 via the displacement roller. More specifically, the wire 50 fed out from the guide roller 45′ disposed on the upstream side from the displacement roller 73 extends from the guide roller 45′ to the displacement roller 73 substantially along the axis of the base plate 71, extends along that outer peripheral surface of the displacement roller 73 which lies on the side remote from the coil spring 75, and further extends from the displacement roller 73 towards the guide roller 45˝ disposed on the downstream side from the roller 73 substantially along the axis of the base plate. The rotation shaft 73a of the displacement roller 73 is displaced towards the side remote from the coil spring with respect to a straight line connecting the rotation shafts of the guide rollers 45′ and 45˝. Therefore, the wire 50 stretched over the rollers 45′, 73 and 45˝ urges the displacement roller 73 towards the coil spring 75 in the axial direction of the base plate 71 against the spring force of the spring 75 with a force corresponding to the wire tension. In other words, the displacement roller 73 is arranged to assume its displaced position at which the wire tension and the spring force of the spring 75 are balanced with each other.

The distance sensor 80 of the wire tension control apparatus, in this embodiment, is constituted by a linear sensor which is arranged to perform noncontacting distance-measurement by the use of a laser beam. The linear sensor 80 is disposed in alignment with the axis of the base plate 71 and fixed on the housing 15 by proper means (not shown). A member for reflecting the laser beam from the linear sensor 80, preferably, a reflection mirror (not shown) which is excellent in the beam reflection property, is so fixed on the slider 72 as to face the linear sensor 80. The linear sensor 80 is designed to measure a distance between the sensor 80 and the reflection mirror disposed on the slider 72 movable in unison with the displacement roller 73 which is displaceable in dependence on the wire tension, and generate an output signal indicative of the displaced position of the displacement roller 73.

The control unit 90 of the wire tension control apparatus includes a receive section for receiving an output signal from the linear sensor 80, and a calculation section for receiving an output signal indicative of the preset value of the wire tension. The calculation section is arranged to read out, from e.g. a look-up table contained in the calculation section, a linear sensor output signal value (reference value) corresponding to a preset value of the wire tension which is variably set, and subtract an actual sensor output signal value from a value equal to twice the reference value. The control unit 90 further includes an output section for supplying an exciting current corresponding to the result of operation to the powder clutch 60.

Now, the operation of the wire tension control apparatus will be explained.

When the operator sets various electric discharge machining conditions including the preset value of the wire tension prior to the start of electric discharge machining, the numerical control device 20 stores the electric discharge machining conditions into a built-in memory, and delivers an output signal indicative of the preset value of the wire tension to the calculation section of the control unit 90 of the wire tension control apparatus. In response to this, the calculation section reads out a linear sensor output signal value (reference value) corresponding to the preset value of the wire tension from the look-up table contained in the calculation section, and stores the reference value into a register contained in the calculation section.

When the machine main body 10 is operated under the control of the numerical control device 20, the wire is fed along the wire feeding path which extends from the wire supply bobbin 41 to the wire recovery box 49, and working pulses are applied between the workpiece 30 and the wire 50, so that the electric discharge machining is carried out. During the electric discharge machining, an exciting current is supplied from the output section of the control unit 90 to the powder clutch 60, and the clutch 60 applies a braking force corresponding to the clutch exciting current to the braking roller 44. As a result, tension is applied to the wire 50 by means of the braking roller 44.

The displacement roller 73 of the wire tension detection mechanism 70 receives the wire tension which acts towards the coil spring 75 in an axial direction of the base plate 71 of the detection mechanism 70, and also receives, via the slider 72, the spring force of the coil spring 75 acting in a direction opposite to that of the wire tension along the axis of the base plate 71. As a result, the displacement roller 73, which is movable in unison with the slider 72 relative to the base plate 71, assumes its displaced position at which the wire tension and the spring force of the spring 75 are balanced with each other. During this time, the linear sensor 80 measures a distance between the sensor and the reflection mirror fixed on the slider 72, i.e., the displaced position of the displacement roller 73, and delivers an output signal indicative of the displaced roller position. At this time, the measurement of the roller position is performed in a noncontacting manner, so that improved measurement precision can be attained, and no adverse effect will not be given to the electric discharge machining.

The calculation section of the control unit 90 subtracts an actual sensor output signal value from a value which is equal to twice the linear sensor output signal value (reference value) corresponding to the preset value of the wire tension. When the wire tension is kept at the preset value, and therefore, the actual sensor output signal value is equal to the reference value, the result of calculation by the calculation section is set equal to the reference value. In this case, an exciting current supplied from the output section of the control unit to the powder clutch 60 is kept at the present current value, so that the wire tension is further kept at the preset value.

On the other hand, when the wire tension increases with the deterioration with age of the powder clutch 60, an increase in the frictional force applied to the wire 50 and the like, the displacement roller 73 is displaced together with the slider 72 in a direction towards the coil spring 75 against the spring force of the coil spring 75. As a result, a distance between the reflection mirror on the slider 72 and the linear sensor 80 increases, and the actual sensor output signal value becomes large. Therefore, the calculated value obtained in the calculation section decreases, and hence an exciting current supplied from the output section to the clutch 60 decreases. As a result, the braking force applied to the braking roller 44 by the clutch 60 is reduced, so that the wire tension decreases. Thereafter, when the wire tension is reduced to the preset value, the exciting current in the clutch 60 is kept at the present value, so that the wire tension is kept at the preset value.

When the wire tension becomes smaller than the preset value, the exciting current of the clutch 60 is increased. A variation in the wire tension can be rapidly compensated in the above manner, and thus the wire tension can be always kept at the preset value. Therefore, reduction in the working precision caused by variation in the wire tension can be prevented.

The present invention is not limited to the above embodiment, and may be modified in various manners.

For example, in the above embodiment, a combination of the linear sensor and the wire tension detection mechanism including the displacement roller is employed. Alternatively, a combination of a displacement member, other than the displacement roller, which is displaceable in dependence on the wire tension, and a sensor, other than the linear sensor, which is capable of detecting the displaced position of the displacement member may be employed. Further, in the above embodiment, the control unit exclusively used for wire tension control is used, but the control function of the control unit can be attained by means of a numerical control device.

## Claims

1. A wire tension control apparatus mounted on a wire-cut electric discharge machine to control the electrode wire tension which is an electric discharge machining condition, the apparatus comprising a braking device for applying a braking force to a wire electrode thereby to cause electrode wire tension during machining, the braking device including a braking roller (44) to apply tension to the wire electrode and an electromagnetic powder clutch (60) for applying a braking force to the braking roller (44), and control means (90) operable to control an exciting current in the electromagnetic powder clutch (60) thereby to adjust the braking force generated by the braking device in dependence upon a value inputted to the control means (90),
characterised by a wire tension detecting mechanism having a displacement member (73) which is displaced in dependence upon the electric discharge machining wire tension and a sensor (80) for measuring a displaced position of the displacement member (73), said value inputted to the control means (90) comprising the output of said sensor (80).

2. A wire tension control apparatus according to claim 1, wherein said sensor (80) is arranged to perform noncontacting measurement of the displaced position of said displacement member (73).

3. A wire tension control apparatus according to claim 2, wherein said sensor (80) is a linear sensor which uses a laser beam for measurement.

4. A wire tension control apparatus according to any preceding claim, wherein said displacement member (73) is a roller on which the electrode wire passes and which is disposed to be displaceable in dependence on the wire tension.

5. A wire tension control apparatus according to claim 4, wherein said wire tension detection mechanism includes a slider (72) for rotatably supporting said roller (73), said slider (72) being movable in unison with said roller (73), and a spring (75) for urging said slider (72) in a direction opposite to a direction along which the wire tension acts on said roller (73).

## Patentansprüche

1. Drahtspannungs-Reguliervorrichtung, die an einer mit elektrischer Entladung arbeitenden Draht-Schneidemaschine angebracht ist, fur die Regulierung der Elektrodendraht-Spannung, welche in einem elektrischen Entladungs-Bearbeitungszustand vorliegt,
mit einer Bremseinrichtung für die Ausübung einer Bremskraft auf eine Drahtelektrode, um dadurch während der Bearbeitung eine Elektrodendraht- Spannung hervorzurufen,
wobei die Bremseinrichtung eine Bremsrolle (44) für die Ausübung einer Spannung auf die Drahtelektrode und eine elektromagnetische Pulver-Kupplung (60) für die Ausübung einer Bremskraft auf die Bremsrolle (44) aufweist, und mit einer Steuereinrichtung (90), die derart betreibbar ist, daß ein Erregungsstrom in der elektromagnetischen Pulver-Kupplung (60) gesteuert wird und daß dadurch die durch die Bremseinrichtung erzeugte Bremskraft in Abhängigkeit von einem in die Steuereinrichtung (90) eingegebenen Wert eingestellt wird,
**dadurch gekennzeichnet,**
daß ein Drahtspannungs-Detektiermechanismus mit einem Verschiebungsglied (73), welches in Abhängigkeit von der elektrischen Entladungsbearbeitungs-Drahtspannung verschoben wird, und einen Sensor (80) für die Messung einer Verschiebeposition des Verschiebungsgliedes (73) umfaßt, und daß der in die Steuereinrichtung (90) eingegebene Wert das Ausgangssignal des Sensors (80) umfaßt.

2. Vorrichtung nach Anspruch 1, wobei der Sensor (80) so angeordnet ist, daß er eine berührungsfreie Messung der Verschiebeposition des Verschiebungsgliedes (73) ausführt.

3. Vorrichtung nach Anspruch 2, wobei der Sensor (80) ein linearer Sensor ist, der einen Laserstrahl für die Messung verwendet.

4. Vorrichtung nach irgendeinem vorhergehenden Anspruch, wobei das Verschiebungsglied (73) eine Rolle ist, auf der der Elektrodendraht läuft und die in Abhängigkeit von der Drahtspannung verschiebbar ist.

5. Vorrichtung nach Anspruch 4, wobei der Drahtspannungs-Detektiermechanismus einen Gleiter (72), der die genannte Rolle (73) drehbar trägt und der in Übereinstimmung mit der betreffenden Rolle (73) bewegbar ist, und eine Feder (75) umfaßt, die den Gleiter (72) in eine Richtung drückt, die entgegengesetzt ist zur Richtung, längs der die Drahtspannung auf die genannte Rolle (73) wirkt.

## Revendications

1. Appareil de réglage de tension de fil, monté sur une machine d'étincelage à découpe par fil pour régler la tension de fil de l'électrode, qui est une condition de l'usinage par étincelage, l'appareil comprenant un dispositif de freinage pour exercer une force de freinage sur une électrode en forme de fil pour ainsi réaliser la tension de fil de l'électrode au cours de l'usinage, le dispositif de freinage englobant un galet de freinage (44) pour appliquer une tension à l'électrode en forme de fil, ainsi qu'un embrayage (60) à particules électromagnétiques pour exercer une force de freinage sur le galet de freinage (44), ainsi qu'un moyen de commande (90) mis en service pour commander un courant d'excitation dans l'embrayage (60) à particules électromagnétiques dans le but de régler ainsi la force de freinage générée par le dispositif de freinage en fonction d'une valeur entrée dans le moyen de commande (90),
caractérisé par un mécanisme de détection de tension de fil comportant un élément de déplacement (73) qui se déplace en fonction de la tension du fil d'usinage par étincelage et un détecteur (80) pour mesurer une position déplacée de l'élément de déplacement (73), ladite valeur entrée dans le moyen de commande (90) comprenant la sortie dudit détecteur (80).

2. Appareil de réglage de tension de fil selon la revendication 1, dans lequel ledit détecteur (80) est arrangé pour réaliser une mesure sans contact de la position déplacée dudit élément de déplacement (73).

3. Appareil de réglage de tension de fil selon la revendication 2, dans lequel ledit détecteur (80) est un détecteur linéaire qui utilise un rayon laser pour la mesure.

4. Appareil de réglage de tension de fil selon l'une quelconque des revendications précédentes, dans lequel ledit élément de déplacement (73) est un rouleau sur lequel passe le fil d'électrode et qui est disposé pour pouvoir être déplacé en fonction de la tension du fil.

5. Appareil de réglage de tension de fil selon la revendication 4, dans lequel ledit mécanisme de détection de tension de fil englobe un coulisseau (72) pour supporter en rotation ledit rouleau (73), ledit coulisseau (72) étant mobile à l'unisson avec ledit rouleau (73), ainsi qu'un ressort (75) pour presser ledit coulisseau (72) dans une direction opposée à la direction le long de laquelle la tension de fil agit sur ledit rouleau (73).
